(19) Europäisches Patentamt

European Patent Office

Office européen des brevets

(11) **EP 1 081 018 B1**

(12) **EUROPÄISCHE PATENTSCHRIFT**

(45) Veröffentlichungstag und Bekanntmachung des Hinweises auf die Patenterteilung:
**13.09.2006 Patentblatt 2006/37**

(51) Int Cl.:
***B62D 6/00*** *(2006.01)*

(21) Anmeldenummer: **00115284.2**

(22) Anmeldetag: **14.07.2000**

(54) **Verfahren und Vorrichtung zur Nachbildung einer mechanischen Kopplung**

Method and apparatus for reproducing a mechanical coupling

Méthode et dispositif pour la reproduction d'un couplage mécanique

(84) Benannte Vertragsstaaten:
**AT BE CH CY DE DK ES FI FR GB GR IE IT LI LU MC NL PT SE**

(30) Priorität: **28.08.1999 DE 19940964**

(43) Veröffentlichungstag der Anmeldung:
**07.03.2001 Patentblatt 2001/10**

(73) Patentinhaber: **Bayerische Motoren Werke Aktiengesellschaft**
**80809 München (DE)**

(72) Erfinder: **Guldner, Jürgen, Dr.**
**80636 München (DE)**

(56) Entgegenhaltungen:
**EP-A- 0 854 075**      **EP-A- 0 860 347**
**DE-A- 19 804 821**

**Beschreibung**

Die Erfindung betrifft ein Verfahren und eine Vorrichtung zur Nachbildung einer mechanischen Kopplung gemäß dem Oberbegriff der Ansprüche 1 bzw. 8.

Bei heutigen Fahrzeugen besteht bei einer Vielzahl von Bedienelementen und zugeordneten zu betätigenden Elementen eine mechanische Verbindung, die nicht nur die von einem Bedienelement vorgegebene Einstellung eines Winkels, eines Weges oder dergleichen Parameter an dem zu betätigenden Element erlaubt, sondern auch entsprechende Rückkoppelungsmomente oder -kräfte überträgt. Als Anwendungsbereiche seien beispielsweise die Systeme Motor- und Getriebeansteuerung (zu betätigendes Element) und Fahrpedal oder Steuerknüppel (Bedienelement) einerseits sowie Bremsen (zu betätigendes Element) und Bremspedal (Bedienelement) andererseits genannt.

Der Einfachheit halber soll die vorliegende Erfindung am Beispiel eines Lenksystems beschrieben werden. Dies soll jedoch nicht als Einschränkung für die Anwendung der Erfindung sondern lediglich als beispielhafte Ausführungsform angesehen werden.

Eine mechanische Kopplung zwischen einem Bedienelement und einem zu betätigenden Element bringt einige Nachteile mit sich. Beispielsweise kann die Koppelungsgröße zwischen den beiden Elementen nur schwer und konstruktiv aufwendig beeinflußt werden. Ferner können sich konstruktive Probleme ergeben, da die mechanische Verbindung zwischen den beiden Elementen raummäßig hergestellt werden muß. Bei einem Lenksystem verwendet man dazu herkömmlicherweise eine Lenksäule, die nicht nur ein Gefährdungspotential bei einem Unfall darstellt, sondern eine gewünschte Variabilität in Bezug auf die Anordnung eines Lenkrades im Fahrzeuginnenraum vermissen läßt.

Als neuer Ansatzpunkt wird seit einiger Zeit in einer Vielzahl von Bereichen bei Kraftfahrzeugen die sog. "by-wire"-Technik diskutiert. Dabei wird die Betätigung eines Bedienelements (z.B. Lenkrad) detektiert und ein entsprechendes Signal an eine Steuereinheit weitergegeben, welche ein Steuersignal für einen Aktuator bereitstellt, der wiederum das zu betätigende Element (z.B. die Räder) beaufschlagt. Durch die lediglich elektrische Koppelung zwischen dem Steuergerät und den einzelnen Aktuatoren bzw. Sensoren und der großen Variabilität bei der Verarbeitung von Eingangssignalen ergeben sich eine Vielzahl von Anwendungsbereichen und konstruktiven Freiheiten.

Ein bekanntes Lenksystem ohne mechanische Verbindung zwischen einem Lenkrad und den lenkbaren Rädern soll nachfolgend zur weiteren Erläuterung der Erfindung dienen.

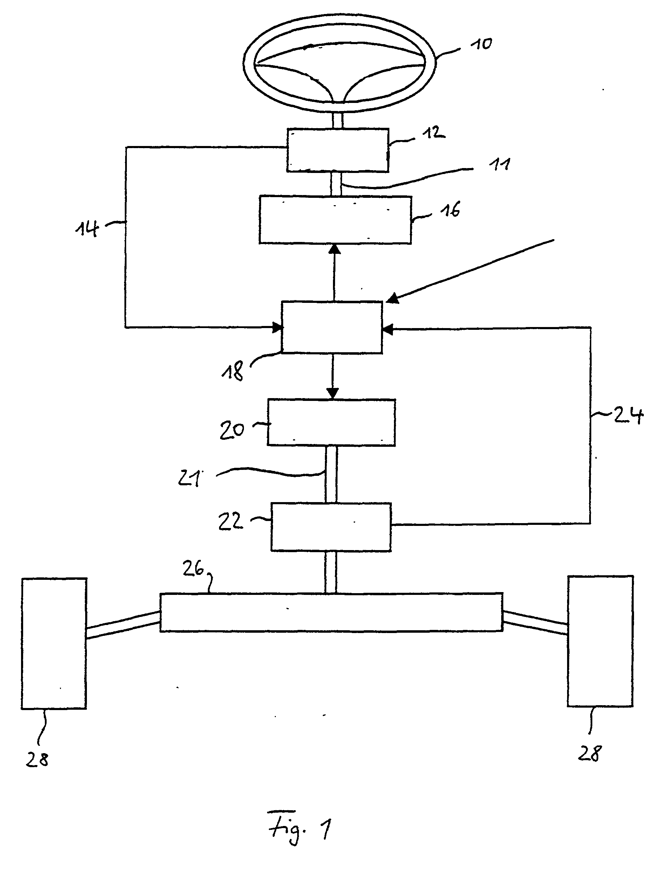

Gemäß Fig. 1 gibt ein Fahrzeugbediener einen gewünschten Lenkwinkel über ein Lenkrad 10, das an einer Lenkradwelle 11 befestigt ist, ein. Der vom Fahrzeugbediener vorgegebene Lenkwinkel wird von einem Lenkwinkelsensor 12 detektiert. Ein dem Lenkwinkel entsprechendes Signal 14 wird an ein Steuergerät 18 abgegeben. Das Steuergerät 18 berechnet aufgrund des vom Bediener gewünschten Lenkwinkels und eventuell anderer Fahrzeuggrößen, wie z. B. der Fahrzeuggeschwindigkeit, einen gewünschten Radwinkel, generiert ein entsprechendes Signal und gibt dieses an eine Radstelleinheit 20 weiter. Die Radstelleinheit 20 beaufschlagt eine Welle 21, die mit einem Lenkgetriebe 26 verbunden ist. Das Lenkgetriebe 26 betätigt die Räder 28 entsprechend dem vom Steuergerät 18 abgegebenen Signal.

Durch die Verstellung der Räder wird in der Regel ein Gegenmoment oder eine Gegenkraft erzeugt, welches über die Räder 28 und das Lenkgetriebe 26 auf die Lenkwelle 21 zurückwirkt. Diese Gegenkraft (oder auch Gegenmoment) wird von einem Gegenkraftsensor 22 detektiert und in Form eines entsprechenden Gegenkraftsignals 24 an das Steuergerät zurückgemeldet. Das Steuergerät generiert zumindest aus dem Gegenkraftsignal 24 ein Rückstellmoment und kommuniziert dieses an eine Momentenstelleinheit 16, welche mit der Lenkradwelle 11 verbunden ist.

Aufgrund des vom Steuergerät 18 abgegebenen Signals an die Momentenstelleinheit 16 beaufschlagt dieses über die Lenkradwelle 11 das Lenkrad.

Durch diese Rückkopplung erhält der Fahrer trotz mechanisch entkoppelter Lenkung eine Rückmeldung über die auf die Räder einwirkenden Kräfte und Momente und somit über die Fahrsituation. Diese Information ist für eine sichere Fahrzeugführung von entscheidender Bedeutung. Aufgrund der Rückmeldung kann der Fahrer die Fahrsituation beurteilen und einschätzen, ob er sich in einer kritischen oder nicht kritischen Fahrsituation befindet, ob er eine Kurve schnell oder langsam fährt etc.

Da die Rückmeldung von großer Wichtigkeit ist, wurden bereits in mehreren Veröffentlichungen Realisierungen für Rückmeldungssysteme diskutiert.

In der DE 197 02 313 C1 ist eine Einrichtung zur Steuerung des Lenkwinkels eines Kraftfahrzeugs beschrieben, bei der ein Lenkwinkelsollwert in Abhängigkeit von einer Lenkwinkelkraft und der Fahrzeuggeschwindigkeit angegeben wird.

Die DE 196 07 028 A1 betrifft eine Lenkung für ein nicht-spurgebundenes Fahrzeug, bei der ein Rückstellmoment für ein Lenkrad als Funktion des Lenkwinkels und einer Lenkwinkelgeschwindigkeit am Lenkrad berechnet wird. Dabei wird ein fahrgeschwindigkeitsabhängiger Koeffizient verwendet. Dieses System entspricht einer Emulation eines künstlichen Feder-Dämpfer-Elementes zur Vermittlung eines Fahrgefühls. Eine reale Rückmeldung eines Rad-/Straße-Kontaktes findet jedoch nicht statt.

Die DE 198 04 821 A1 beschreibt eine Lenkungssteuerungsvorrichtung zum Drehen gelenkter Räder in Übereinstimmung mit der Drehung eines mechanisch entkoppelten Lenkrads, wobei die Lenkungssteuerungsvorrichtung eine Lenkwinkelerfassungseinheit zum Erfassen des Lenkwinkels, eine Lenkkrafterfassungseinrichtung zum Erfassen der auf die Lenkwelle aufgebrachten Lenkkraft, eine Drehreaktionskraft-Erfassungseinrichtung zum Erfassen einer auf das gelenkte Rad aufgebrachten Drehreaktionskraft und eine Drehbetragserfassungseinrichtung zum Erfassen des Drehbetrags des gelenkten Rades umfasst. Zum Vermitteln eines verbesserten Lenkgefühls wird die Lenkwelle mittels eines Lenkwellenantriebs auf der Basis einer zur Lenkkraft proportionalen Kraft, der Drehreaktionskraft und einer Abweichung zwischen einem Zielsteuerungsbetrag, der auf dem Lenkwinkel basiert, und dem Drehbetrag angetrieben, wodurch vor allem der im Anfangszustand des Lenkens auftretende unerwünschte Anstieg der Abweichung zwischen der zur Lenkkraft proportionalen Kraft und der Drehreaktionskraft vermindert werden soll.

In der EP 0 775 624 A2 wird ein Rückstellmoment als Funktion der Fahrgeschwindigkeit, eines Motorstroms einer Radwinkelstelleinheit, der Außentemperatur, einem Scheibenwischerschalter und einem Ultraschallsensor berechnet. Auch dieses System stellt nur ein künstliches Feder-Dämpfersystem dar, über welches keine ausreichend authentische Rückmeldung vermittelt werden kann.

Aus der EP 0 261 325 A1 ist ein Lenksystem insbesondere mit Bezug auf ein Lenkgefühl beschrieben. Nach der darin beschriebenen Lehre wird eine elektromagnetische Reibungsbremse verwendet, die eine steuerbare mechanische Reibung an einer Lenkwelle erzeugt, so daß eine Rotation von der Lenkwelle in einer Lenkwellenhalterung mehr oder weniger gehemmt wird. Doch auch bei dieser Ausführungsform eines mechanisch entkoppelten Lenksystems wird ein Fahrgefühl nur künstlich erzeugt.

In keinen der vorgenannten Ausführungsformen für ein Lenksystem ist eine genaue Bestimmung einer realen Abbildung eines Lenkgefühls heutiger Lenkungen beschrieben.

Aufgabe der Erfindung ist es, ein Verfahren und eine Vorrichtung der eingangs genannten Art anzugeben, bei dem bzw. bei der durch eine reale Abbildung einer nachzubildenden mechanischen Kopplung ein authentischer Rückkopplungseffekt erreicht wird.

Diese Aufgabe wird verfahrensmäßig durch die im Anspruch 1 und vorrichtungsmäßig durch die im Anspruch 8 angegebenen Merkmale erreicht.

Ein Kerngedanke der Erfindung ist darin zu sehen, daß die bei einer mechanischen Kopplung zwischen einem Bedienelement und einem zu betätigenden Element vorliegende Kopplung unter Zuhilfenahme eines Steuergeräts zwischen den beiden Aktuatoren nachgebildet wird. Dazu wird zum einen die Größe einer nachzubildenden mechanischen Kopplung zwischen einem Bedienelement und einem zu betätigenden Element vorgegeben. Sodann wird aus dieser Größe sowie unter Berücksichtigung der Kopplungen zwischen dem Aktuator und dem Bedienelement sowie zwischen dem Aktuator und dem zu betätigenden Element eine Aktuatorkopplungsgröße bestimmt. Die Aktuatorkopplungsgröße definiert genau diejenige Kopplungsgröße zwischen den beiden Aktuatoren, die notwendig ist, um zusammen mit den Kopplungen zwischen dem ersten Aktuator und dem Bedienelement sowie dem zweiten Aktuator und dem zu betätigenden Element die nachzubildende mechanische Kopplung zu ergeben.

In Abhängigkeit von der Aktuatorkopplungsgröße wird dann zumindest eine Steuergröße für zumindest einen der beiden Aktuatoren bestimmt. Durch eine entsprechende Beaufschlagung der Aktuatoren und der Erzeugung eines daraus resultierenden Moments oder einer daraus resultierenden Kraft wird eine authentische Nachbildung einer nachzubildende mechanischen Kopplung insbesondere im Hinblick auf das Elastizitätsverhalten im Gesamtsystem erreicht.

Da durch die oben angegebene Maßnahme die mechanische Kopplung genau nachgebildet wird, kann ein Bediener des Bedienelements auch keinen Unterschied zu einer herkömmlichen Rückmeldung erkennen. Insgesamt muß sich beispielsweise ein Fahrzeugbediener nicht auf eine andere Haptik bei der Bedienung eines Fahrzeugs einstellen, wenn er von einem herkömmlichen System auf ein "by-wire"-System umsteigt.

Die vorliegende Erfindung kann auf jegliche bisher mechanische Kopplungen angewendet werden, die nun jedoch ohne direkte mechanische Verbindung realisiert werden sollen und bei denen Rückkopplungen notwendig sind, um den Bediener über Kräfte oder Momente in Kenntnis zu setzen, die auf das zu betätigende Element wirken.

Gemäß einer besonderen Ausführungsform der Erfindung werden Übertragungsmatrizen verwendet, die Kopplungsgrößen zwischen Winkeln und Momenten von Aktuatoren definieren. Insbesondere die Aktuatorkopplungsgröße muß dabei so berechnet werden, daß in Kombination mit anderen Kopplungsmatrizen zwischen den Aktuatoren und dem Bedienelement einerseits bzw. dem zu betätigenden Element andererseits eine nachzubildende mechanische Kopplung $Z_{LS}$ erreicht wird.

Insbesondere die Ansprüche 2 und 9 sind dabei auf eine Anwendung bei einem Lenksystem abgestellt. Allerdings können die Größe $\varphi_{AM}$ und $\tau_{AM}$, welche gemäß den Ansprüchen 2 und 9 Winkel bzw. Momente darstellen auch Längenmaße bzw. Kräfte darstellen. Auf diese Weise kann die Erfindung nicht nur auf Dreh- sondern auch auf Längenaktuatoren angewendet werden.

Durch eine Beeinflussung der Aktuatorkopplung oder der Erzeugung der Steuergröße für einen oder beide Aktuatoren kann die zu erreichende Kopplung zwischen Bedienelement und zu betätigendem Element in einer gewünschten Weise verändert oder mit einem anderen Moment überlagert werden. Beispielsweise ist es möglich, die vorzugebende Größe für die nachzubildende mechanische Kopplung in Abhängigkeit von Eingangsparametern wie der Fahrzeuggeschwindigkeit abhängig zu machen. In diesem Fall verändert sich die mechanische Kopplung entsprechend der verwendeten Eingangsgröße und läßt so die Nachbildung verschiedener Effekte zu.

Auf gleiche Weise können auch verschiedene Winkelübersetzungen und/oder Momenten- oder Kraftübersetzungen zwischen den beiden Aktuatoren erreicht werden. Dazu ist es lediglich notwendig, die Aktuator-Kopplung in der erforderlichen Weise zu variieren. Als Eingangsparameter können beispielsweise Fahrzeugbetriebs- und/oder Umgebungsparameter berücksichtigt werden. So ist es möglich, die Fahrzeuggeschwindigkeit, den Straßenzustand, ein Gierwinkelsignal oder andere Fahrzeugsbetriebs- oder Umgebungsparameter als Eingangsparameter zu verwenden.

Zur Komfortverbesserung dient die Lenkübersetzung, bei der das Verhältnis zwischen einem Lenkradwinkel $\varphi_{LR}$ und einem Lenkgetriebewinkel $\varphi_{LG}$ oder aber auch eine Momentenübersetzung, also das Verhältnis zwischen Lenkradmoment $\tau_{LR}$ und Lenkgetriebemoment $\tau_{LR}$ verändert werden kann.

Natürlich kann das Lenkradmoment zusätzlich auch in Abhängigkeit von Lenkrad- bzw. Lenkgetriebewinkel gewählt werden. Damit könnte dem authentischen mechanisch wirkendem System ein künstliches Feder-Dämpfungssystem überlagert werden, was einen Effekt wie in der DE 196 07 028 C1 in additiver Weise hervorruft.

In einer weiteren vorteilhaften Ausführungsform der Erfindung kann ein Vorhalteglied eingesetzt werden, mit dem die Lenkvorgabe des Fahrers am Bedienelement gefiltert wird. Damit kann die Reaktion des Fahrzeugs auf eine Lenkvorgabe beschleunigt werden (Vorhaltelenkung).

Zusätzlich zur Lenkvorgabe des Fahrers am Bedienelement kann eine Lenkwinkelvorgabe aus anderen Größen wie beispielsweise der Giergeschwindigkeit des Fahrzeugs berechnet werden. Diese Maßnahme könnte zum Ausregeln von Zeit- und Umwelteinflüssen verwendet werden.

Zur Störunterdrückung ist es von Vorteil, einen lokalen Momenten- oder Kraftkreis in einem Modul des zu betätigenden Elements einzuführen. Vorzugsweise wird dabei ein Hochpaßverhalten gewählt, um die stationäre Genauigkeit der Regelung nicht zu gefährden. Auch Haftreibungseffekte im Lenkgetriebe können durch nichtlineare Berücksichtigung bei der Erzeugung der Aktuatorkopplungsgröße bzw. der Steuerungsgröße nachgebildet werden.

Insgesamt ist es mit der vorliegenden Erfindung auf einfache Weise möglich, ein authentisches Rückkopplungsgefühl zu vermitteln.

Eine konkrete Ausführungsform der Erfindung wird anhand eines mechanisch entkoppelten Lenksystems und mit Bezug auf die beiliegenden Zeichnungen näher erläutert. Die Zeichnungen zeigen in:

Fig. 1      eine schematische Darstellung eines Wirkschaltbildes einer mechanisch entkoppelten Lenkung gemäß dem Stand der Technik,

Fig. 2      eine schematische Darstellung eines Wirkschaltbildes mit Momenten- und Auslenkwinkeln bei einer mechanischen Lenkung ohne Servounterstützung,

Fig. 3      eine Abbildung wie Fig. 2, jedoch für eine mechanische Lenkung mit Servounterstützung,

Fig. 4      ein Diagramm das das Unterstützungsmoment gegenüber dem Lenkradmoment bei einer Servotronic für zwei verschiedene Fahrgeschwindigkeiten darstellt und

Fig. 5      eine schematische Darstellung eines Schemas eines Lenksystems ohne mechanische Kopplung zwischen Bedieneinheit und Lenkgetriebe gemäß der vorliegenden Erfindung.

Zum besseren Verständnis der Erfindung werden zunächst die Gegebenheiten bei einer Lenkung mit mechanische Koppelung mit und ohne Servounterstützung dargelegt. Die nachfolgenden Modelle zur Auslegung der Lenksysteme konzentrieren sich dabei auf die grundlegenden physikalischen Effekte, die in Form von Massen, Federn und Dämpfern vorliegen. Nichtlinearitäten werden dabei vernachlässigt.

In allen Figuren bezeichnen gleiche Bezugszeichen und Angaben gleiche Vorrichtungen bzw. physikalische Größen. Es werden nachfolgende Größen verwendet und berücksichtigt:

$\phi_{LR}$      Lenkwinkel an der Bedieneinheit 10

$\tau_F$      Fahrermoment an der Bedieneinheit 10

$\phi_{LG}$      Winkel am Ausgang der Radstelleinheit 20

$\tau_R$      Rad/Straßemoment

$\tau_{LG}$      Moment am Lenkgetriebe

$\tau_{LR}$      Moment an der Lenkradwelle 11

$v$      Fahrzeuggeschwindigkeit

$\phi_{AM}$      Winkel der Momentenstelleinheit 16

$\tau_{AM}$      durch die Momentenstelleinheit 16 generiertes Moment

$\phi_{BM}$      Winkel der Radstelleinrichtung 20 am Lenkgetriebe 26

$\tau_{BM}$     durch die Radstelleinrichtung 20 erzeugtes Moment

$J_{LR}$     Rotatorische Trägheit der Bedieneinheit 10

$J_R$     Rotatorische Trägheit der beiden gelenkten Räder 28 bezogen auf $\varphi_{LG}$

$d_{LR}$     Gleitreibung in der Lenkradwelle 11

$d_{LG}$     Gleitreibung im Lenkgetriebe 26

$C_{LS}$     Steifigkeit des Drehstabes einer heutigen Servolenkung

$C_{LR}$     Steifigkeit des Drehstabes in der Lenksäule bei einem Lenksystem ohne mechanische Kopplung zwischen Bedieneinheit 10 und Momentenstelleinheit 16

$C_{LG}$     Steifigkeit des Drehstabes im Lenkgetriebemodul bei einem Lenksystem ohne mechanische Kopplung zwischen Radstelleinrichtung 20 und Lenkgetriebe 26

$\tau_{LS}$     Unterstützungsmoment einer Lenkung mit Servounterstützung

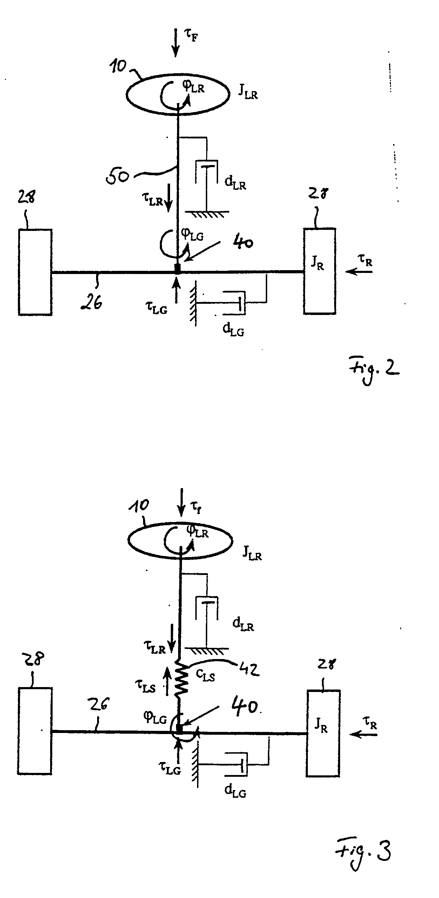

In Fig. 2 ist in schematischer Weise ein Lenksystem mit einer als Lenkrad ausgebildeten Bedieneinheit 10 dargestellt, welche mit einer Lenksäule 50 mechanisch verbunden ist. Die Lenksäule 50 wiederum ist mechanisch über ein Ritzel 40 mit einem Lenkgetriebe 26 gekoppelt, welches zur Auslenkung von lenkbaren Rädern 28 in bekannter Weise ausgebildet ist.

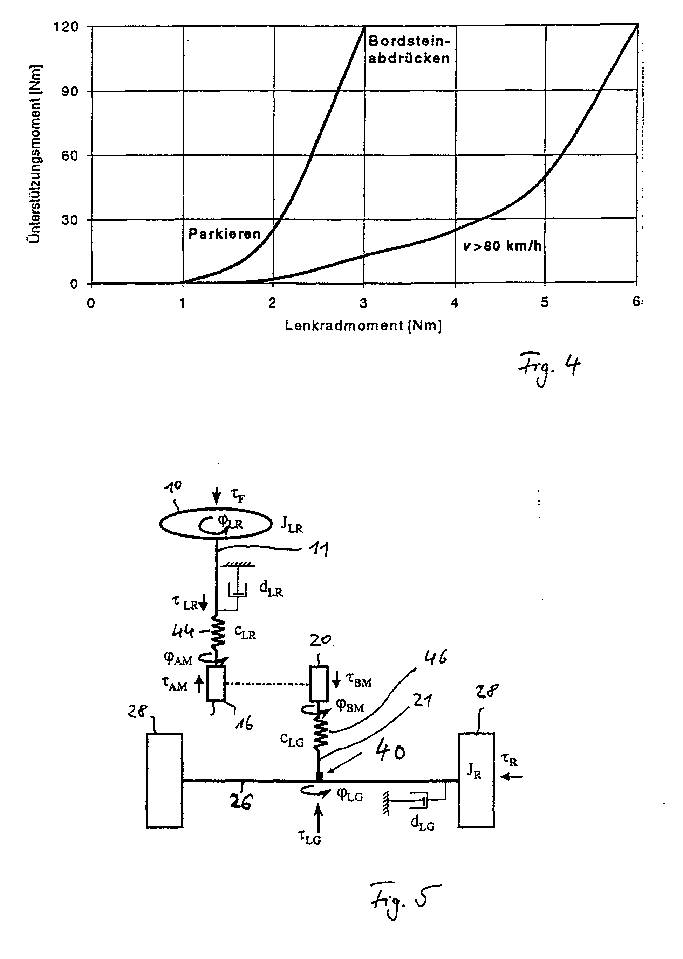

Fig. 3 unterscheidet sich von Fig. 2 nur dahingehend, daß ein Fahrzeuglenksystem mit Servounterstützung beschrieben ist, die in dem Steifigkeitsparameter $C_{LS}$ und einem zusätzlichen Unterstützungsmoment $\tau_{LS}$ zum Ausdruck kommt.

Fig. 4 stellt exemplarisch zwei Kennlinien des Unterstützungsmoments $\tau_{LS}$ als Funktion des Lenkradmomentes $\tau_{LR}$ dar, und zwar für zwei verschiedene Fahrzeuggeschwindigkeiten.

Anhand von Fig. 5 wird nachfolgend die vorliegende Erfindung näher erläutert. Diese Figur unterscheidet sich gegenüber den Fig. 2 und 3 dadurch, daß die Bedieneinheit 10 von dem Lenkgetriebe 26 mechanisch entkoppelt ist. Die Kopplung ist über zwei Aktuatoren, nämlich eine Momentenstelleinheit 16 und eine Radstelleinrichtung 20, realisiert, die elektrisch angetrieben sind und unter Zwischenschaltung von Steifigkeiten $C_{LR}$ bzw. $C_{LG}$ die von ihnen erzeugten Momente an eine Lenkradwelle 11 bzw. eine Lenkwelle 21 abgeben. Die beiden Aktuatoren, also die Momentenstelleinheit 16 sowie die Radstelleinrichtung 20, werden von einem Steuergerät 18 (vgl. Fig. 1) beaufschlagt. Durch eine entsprechende Ansteuerung der Momentenstelleinheit 16 sowie der Radstelleinrichtung 20 kann eine bestimmte Koppelung zwischen diesen beiden Aktuatoren sowie zwischen der Bedieneinheit 10 und dem Lenkgetriebe 26 erreicht werden.

Zunächst soll eine rein mechanische Lenkung ohne Servounterstützung, wie sie in Fig. 2 dargestellt ist, beschrieben werden.

Dabei werden zur Darstellung von Reaktionsgleichungen Übertragungsmatrizen verwendet, wobei in Abweichung von der üblichen Darstellung als Geschwindigkeits-Kraftverhältnis vorliegend Winkel und Momente als Referenzgrößen verwendet werden. Betrachtet man bei einem solchen Modell Eingangsgrößen Winkel $\phi_{ein}$ und Moment $\tau_{ein}$ sowie Ausgangsgrößen Winkel $\varphi_{aus}$ und Moment $\tau_{aus}$, so läßt sich eine Übertragungs- und Kopplungsfunktion in allgemeiner und kompakter Matrizenform wie folgt schreiben:

$$\begin{bmatrix} \varphi_{aus} \\ \tau_{aus} \end{bmatrix} = \begin{bmatrix} z_{11} & z_{12} \\ z_{21} & _{22} \end{bmatrix} \begin{bmatrix} \varphi_{ein} \\ \tau_{ein} \end{bmatrix} \qquad (1)$$

Dabei sind die einzelnen Elemente definiert zu:

$$z_{11} = \left.\frac{\varphi_{aus}}{\varphi_{ein}}\right|_{\tau_{ein}=0} \qquad\qquad z_{12} = \left.\frac{\varphi_{aus}}{\tau_{ein}}\right|_{\varphi_{ein}=0}$$

$$(2)$$

$$z_{21} = \frac{\tau_{aus}}{\varphi_{ein}}\bigg|_{\tau_{ein}=0} \qquad\qquad z_{22} = \frac{\tau_{aus}}{\tau_{ein}}\bigg|_{\varphi_{ein}=0}$$

Es beschreibt $Z_{11}$ die Winkelübersetzung, $Z_{22}$ die Momentenübersetzung. Die Größen $Z_{12}$ und $Z_{21}$ stellen die Eingangs- bzw. Ausgangssteifigkeiten dar.

Bei einer rein mechanischen Lenkung verbindet, wie in Fig. 2 dargestellt, eine ideal starre und masselose Lenksäule die Bedieneinheit 10 mit dem Lenkgetriebe 26. Dabei gelten

$$\varphi_{LR} = \varphi_{LG} \quad \text{und} \qquad \tau_{lr} = -\tau_{LG} \qquad\qquad (3)$$

Als bewegte Trägheiten werden dabei die Trägheit des Lenkrades $J_{LR}$ und die Trägheit $J_R$ der lenkbaren Räder 28 und des Lenkgetriebes 26 miteinbezogen. Ferner wird die Drehbewegung der Bedieneinheit 10 mit einem Gleitreibungskoeffizienten $d_{LR}$ gedämpft. Damit ergibt sich:

$$\tau_F = \tau_{LR} + \left(J_{LR}s^2 + d_{LR}s\right)\varphi_{LR} \qquad\qquad (4)$$

wobei s die Laplace-Variable darstellt.

Die Auswirkungen auf die lenkbaren Räder 28 werden beschrieben durch:

$$\tau_R = \tau_{LG} + \left(J_R s^2 + d_{LG}s\right)\varphi_{LG} \qquad\qquad (5)$$

Dabei sind die Trägheiten der Räder $J_R$ und der Reibkoeffizienten $d_{LG}$ in ihrer Dynamik auf den Lenkgetriebewinkel $\varphi_{LG}$ bezogene Parameter.

In der unter (1) und (2) gewählten Matrixschreibweise ergibt sich aus den Gleichungen (3) bis (5) die folgende Lenkradübertragungsmatrix:

$$\begin{bmatrix} \varphi_{LR} \\ \tau_F \end{bmatrix} = \begin{bmatrix} 1 & 0 \\ J_{LR}s^2 + d_{LR}s & 1 \end{bmatrix}\begin{bmatrix} \varphi_{LR} \\ \tau_{LR} \end{bmatrix} = Z_{LR}\begin{bmatrix} \varphi_{LR} \\ \tau_{LR} \end{bmatrix} \qquad\qquad (6)$$

zur Lenksäulenübertragungsmatrix und

$$\begin{bmatrix} \varphi_{LR} \\ \tau_{LR} \end{bmatrix} = \begin{bmatrix} 1 & 0 \\ 0 & -1 \end{bmatrix}\begin{bmatrix} \varphi_{LG} \\ \tau_{LG} \end{bmatrix} = Z_{LS}\begin{bmatrix} \varphi_{LG} \\ \tau_{LG} \end{bmatrix} \qquad\qquad (7)$$

zur Übertragungsmatrix der gelenkten Räder:

EP 1 081 018 B1

$$\begin{bmatrix} \varphi_{LG} \\ \tau_{LG} \end{bmatrix} = \begin{bmatrix} 1 & 0 \\ -J_{LR}s^2 - d_{LR}s & 1 \end{bmatrix} \begin{bmatrix} \varphi_{LG} \\ \tau_R \end{bmatrix} = Z_{GR} \begin{bmatrix} \varphi_{LG} \\ \tau_R \end{bmatrix} \qquad (8)$$

Der Fahrer fühlt somit den Rad-/Straße-Kontrakt über die Gesamtübertragungsmatrix der mechanischen Lenkung, die sich wie folgt beschreiben läßt:

$$\begin{bmatrix} \varphi_{LR} \\ \tau_F \end{bmatrix} = Z_{LR}Z_{LS}Z_{GR} \begin{bmatrix} \varphi_{LG} \\ \tau_R \end{bmatrix} = Z_{ML} \begin{bmatrix} \varphi_{LG} \\ \tau_R \end{bmatrix} \qquad (9)$$

Verwendet man die gleiche Beschreibungsart bei einer mechanischen Lenkung mit Servounterstützung (Servotronic), so muß berücksichtigt werden, daß über einen Drehstab 42 (siehe Fig. 3) in der Lenksäule das Moment auf die Bedieneinheit 10 $\tau_{LR}$ ermittelt und über eine nichtlineare Kennlinie verstärkt wird. Bei einer Servounterstützung ist die Kennlinie des Zusatzlenkmomentes $\tau_{LS}$ der Servounterstützung meist geschwindigkeitsabhängig. Damit gilt

$$\tau_{LG} = -\left(\tau_{LR} + \tau_{LS}(\tau_{LR}, v)\right) \qquad (10)$$

In Fig. 4 sind zwei Verstärkungskennlinien $\tau_{LS}$ dargestellt, die das Unterstützungsmoment in Abhängigkeit des Lenkradmomentes $\tau_{LR}$ darstellen. Die gewählten Geschwindigkeiten sind eine Parkiergeschwindigkeit und eine Geschwindigkeit von v > 80 km/h.
Durch den Einfluß des Drehstabes 42 mit der Steifigkeit $C_{LS}$ ergibt sich für die Winkelzuordnung zwischen dem Lenkwinkel an der Bedieneinheit $\phi_{LR}$ und dem Lenkgetriebewinkel $\phi_{LG}$

$$\varphi_{LR} = \varphi_{LG} + \frac{\tau_{LR}}{c_{LS}} \qquad (11)$$

Die Gleichungen 10 und 11 können anstelle der Gleichung 7 in Matrizenschreibweise zusammengefaßt werden zu:

$$\begin{bmatrix} \varphi_{LR} \\ \tau_{LR} \end{bmatrix} = \begin{bmatrix} 1 & \frac{1}{c_{LS}} \\ 0 & -1 \end{bmatrix} \begin{bmatrix} \varphi_{LG} \\ \tau_{LG} \end{bmatrix} - \begin{bmatrix} \frac{1}{c_{LS}} \\ 1 \end{bmatrix} \tau_{LS}(\tau_{LR}, v) = Z_{LSS} \begin{bmatrix} \varphi_{LG} \\ \tau_{LG} \end{bmatrix} \qquad (12)$$

Bei einem Lenksystem ohne mechanische Kopplung zwischen der Bedieneinheit 10 und den zu lenkenden Rädern 28 (siehe nun Fig. 5) ist die Lenksäule 50 aufgespalten in die Lenkradwelle 11 für die Bedieneinheit 10 und die Lenkwelle 21 für das Lenkradgetriebe. Damit ergeben sich zwei sog. Module, nämlich ein Lenkradmodul, welches die Lenkradwelle 11, das Bedienelement 10, den Drehstab 44 und die Momentenstelleinheit 16 umfaßt sowie ein Lenkgetriebemodul, welches das Lenkritzel 40, das Lenkgetriebe 26, den Drehstab 46, die Radstelleinheit 20 und die zu lenkenden Räder 28 umfaßt.
An die Stelle des Drehstabes 42 der Servolenkung (vgl. Fig. 3) treten nunmehr die zwei elektrischen Aktuatoren, nämlich die Momentenstelleinheit 16 und die Radstelleinheit 21. Die Momentenstelleinheit 16 zur Erzeugung des Lenkgefühls an der Bedieneinheit 10 ist über einen weiteren Drehstab 44 der Steifigkeit $C_{LR}$ mit der Lenkradwelle 11 und

7

dem Bedienelement 10 verbunden.

Die Radstelleinheit 20 zum Lenken der lenkbaren Räder 28 ist ebenfalls über einen weiteren Drehstab 46 mit Steifigkeit $C_{LG}$ mit dem Ritzel 40 des Lenkgetriebes verbunden (vgl. Fig. 5).

Berücksichtigt man nun die beiden Drehstäbe analog zu der Gleichung (12), so ergeben sich die folgenden Gleichungen:

$$\varphi_{LR} = \varphi_{AM} + \frac{\tau_{LR}}{c_{LR}} \qquad (13)$$

$$-\tau_{LR} = \tau_{AM} \qquad (14)$$

$$\varphi_{LG} = \varphi_{BM} + \frac{\tau_{LG}}{c_{LG}} \qquad (15)$$

$$-\tau_{BM} = \tau_{LG} \qquad (16)$$

In Matrixschreibweise können die Gleichungen (13) bis (16) anstelle von (12) wie folgt zusammengefaßt werden:

$$\begin{bmatrix} \varphi_{LR} \\ \tau_{LR} \end{bmatrix} = \begin{bmatrix} 1 & -\dfrac{1}{c_{LR}} \\ 0 & 1 \end{bmatrix} \begin{bmatrix} \varphi_{AM} \\ \tau_{AM} \end{bmatrix} = Z_{AM} \begin{bmatrix} \varphi_{AM} \\ \tau_{AM} \end{bmatrix} \qquad (17)$$

und

$$\begin{bmatrix} \varphi_{BM} \\ \tau_{BM} \end{bmatrix} = \begin{bmatrix} 1 & -\dfrac{1}{c_{LG}} \\ 0 & 1 \end{bmatrix} \begin{bmatrix} \varphi_{LG} \\ \tau_{LG} \end{bmatrix} = Z_{BM} \begin{bmatrix} \varphi_{LG} \\ \tau_{LG} \end{bmatrix} \qquad (18)$$

In erfinderischer Weise wird nunmehr eine Kopplung zwischen den beiden Aktuatoren, nämlich der Momentenstelleinheit 16 und der Radstelleinheit 20 wie folgt definiert:

$$\begin{bmatrix} \varphi_{AM} \\ \tau_{AM} \end{bmatrix} = Z_{\text{Reg}} \begin{bmatrix} \varphi_{BM} \\ \tau_{BM} \end{bmatrix} \qquad (19)$$

Mit dieser Gleichung und unter Beachtung der Bedingung

$$Z_{AM} Z_{\mathrm{Reg}} Z_{BM} = Z_{LS} \qquad\qquad (20)$$

kann damit auf einfache Weise exakt das Verhalten und das Lenkgefühl bei einer mechanischen Lenkung nachgebildet werden. Dabei sind die Matrizen $Z_{AM}$ und $Z_{BM}$ konstant, so daß durch eine entsprechende Wahl der Aktuator-Kopplungsmatrix $Z_{reg}$ die Art der gewählten nachzubildenden mechanischen Kopplung $Z_{LS}$ gewählt werden kann.

Bei der Nachbildung einer mechanischen Kopplung mit Servolenkung kann die gleiche Übertragungsmatrix

$$\begin{bmatrix} \varphi_{AM} \\ \tau_{AM} \end{bmatrix} = Z_{\mathrm{Reg}} \begin{bmatrix} \varphi_{BM} \\ \tau_{BM} \end{bmatrix} \qquad\qquad (21)$$

verwendet werden, wobei nunmehr die Bedingung

$$Z_{AM} Z_{\mathrm{Reg}} Z_{BM} = Z_{LSS} \qquad\qquad (22)$$

zu berücksichtigen ist. Dabei unterscheiden sich die Matrizen $Z_{LS}$ und $Z_{LSS}$, wie aus einem Vergleich der Gleichungen (7) und (12) zu erkennen sind, sowohl durch einen Steifigkeitsfaktor als auch einen von der Geschwindigkeit und einem Bedienmoment an der Bedieneinheit 10 abhängigen Parameter.

Die vorliegende Erfindung gewährleistet eine authentische Nachbildung eines Fahrgefühls wie bei einer mechanischen Lenkung mit bzw. ohne Servolenkung bzw. eine authentische Rückkopplung.

Dabei wird nicht wie bei den anderen vorgeschlagenen Vorgehensweisen ein bestimmtes Rückstellmoment lediglich in Abhängigkeit von einer an den lenkbaren Rädern erzeugten Gegenkraft, der Fahrzeuggeschwindigkeit oder einem Lenkwinkel erzeugt. Vielmehr unterscheidet sich der vorliegende Ansatz in einer physikalischen Nachbildung einer mechanischen Kopplung, die dann die Rückkopplung eines detektierten an den Rädern anliegenden Momentes bestimmt.

Wie eingangs bereits erwähnt, kann die vorliegende Erfindung natürlich überall dort angewendet werden, wo eine vormals mechanische Kopplung zwischen einem Bedienelement und einem zu betätigenden Element durch eine mechanisch entkoppelte Verbindung ersetzt wird, wobei auf eine Rückmeldung nicht verzichtet werden kann.

**Patentansprüche**

1. Verfahren zur Nachbildung einer mechanischen Kopplung zwischen einem von einem Bediener zu betätigenden Bedienelement (10) und einem zu betätigenden Element (28) bei einem Fahrzeug, die beide nicht direkt miteinander mechanisch gekoppelt sind, wobei das Bedienelement (10) von einem ersten elektrischen Aktuator (16) drehmoment- oder kraftmäßig beaufschlagt wird und das zu betätigende Element (28) von einem zweiten elektrischen Aktuator (20) drehmoment- oder kraftmäßig beaufschlagt wird, mit den Schritten:

Beaufschlagen des zu betätigenden Elements (28) durch den zweiten elektrischen Aktuator (20) mit einem Wirkdrehmoment oder einer Wirkkraft,
Erfassen des auf das zu betätigende Element (28) wirkenden Gegenmomentes ($\tau_{LG}$) oder der darauf wirkenden Gegenkraft,
Berechnen eines Rückkopplungsdrehmomentes oder einer Rückkopplungskraft in Abhängigkeit von dem Gegenmoment oder der Gegenkraft,
Beaufschlagen des Bedienelements (10) durch den ersten elektrischen Aktuator (16) mit dem Rückkopplungsdrehmoment oder der Rückkopplungskraft,
**dadurch gekennzeichnet,**
**daß** eine Größe für die nachzubildende mechanische Kopplung zwischen dem Bedienelement (10) und dem zu betätigenden Element (28) in Form einer Matrix (Z$_{LS}$, Z$_{LSS}$) vorgegeben wird,
**daß** aus der Größe für die nachzubildenden mechanischen Kopplung und unter Berücksichtigung der Kopplungen zwischen dem ersten Aktuator (16) und dem Bedienelement (10) sowie dem zweiten Aktuator (20) und dem zu betätigenden Element (28) zumindest eine Aktuator-Kopplungsgröße bestimmt wird und
**daß** wenigstens aus der zumindest einen Aktuator-Kopplungsgröße und dem erfaßten Gegenmoment oder der erfaßten Gegenkraft zumindest eine Steuerungsgröße für den ersten Aktuator (16) bestimmt wird.

2. Verfahren nach Anspruch 1,
**dadurch gekennzeichnet,**
**daß** als Aktuator-Kopplungsgröße eine Übertragungsmatrix Z$_{Reg}$, die die Kopplung zwischen den beiden Aktuatoren (16, 20) gemäß

$$\begin{bmatrix} \varphi_{AM} \\ \tau_{AM} \end{bmatrix} = Z_{\mathrm{Reg}} \begin{bmatrix} \varphi_{BM} \\ \tau_{BM} \end{bmatrix}$$

definiert,
wobei $\phi_{AM}$ ein Winkel oder eine Länge am ersten Aktuators, $\phi_{BM}$ ein Winkel oder eine Länge am zweiten Aktuator, $\tau_{AM}$ ein Moment oder eine Kraft am ersten Aktuator und $\tau_{BM}$ ein Moment oder eine Kraft am zweiten Aktuator darstellt, unter Berücksichtigung der Bedingung

$$Z_{AM}Z_{Reg}Z_{BM} = Z_{LS}$$

mit Z$_{AM}$ als Kopplungsmatrix zwischen dem Bedienelement (10) und dem ersten Aktuator (16), Z$_{BM}$ als Kopplungsmatrix zwischen dem zu betätigenden Element (28) und dem zweiten Aktuator (20) und Z$_{LS}$ als Matrix einer nachzubildenden mechanischen Kopplung zwischen Bedienelement (10) und zu betätigendem Element (28), berechnet wird.

3. Verfahren nach einem der vorhergehenden Ansprüche,
**dadurch gekennzeichnet,**
**daß** die Aktuator-Kopplung derart bestimmt wird, daß eine Winkelübersetzung und/oder eine Momenten- oder Kraftübersetzung zwischen den beiden Aktuatoren vorliegt.

4. Verfahren nach Anspruch 3,
**dadurch gekennzeichnet,**
**daß** die Winkel-, Momenten- und/oder Kraftübersetzung in Abhängigkeit von Fahrbetriebsparametern bestimmt wird.

5. Verfahren nach einem der vorhergehenden Ansprüche,
**dadurch gekennzeichnet,**
**daß** bei der Bestimmung der zumindest einen Aktuator-Kopplungsgröße oder der zumindest einen Steuerungsgröße weitere Fahrzeugbetriebs- und/oder Umgebungsparameter berücksichtigt werden.

6. Verfahren nach einem Anspruch 5,
**dadurch gekennzeichnet,**
**daß** eine Betätigungsgröße des Bedienelementes (10), eine Fahrzeuggeschwindigkeit, der Straßenzustand oder ein Gierwinkelsignal als Fahrzeugbetriebs- oder Umgebungsparameter verwendet werden.

7. Verfahren nach einem der vorhergehenden Ansprüche,
**dadurch gekennzeichnet,**
**daß** zur Störunterdrückung ein lokaler Momenten- oder Kraftkreis in einem Modul des zu betätigenden Elements (28) verwendet wird.

8. Vorrichtung zur Nachbildung einer mechanischen Kopplung zwischen einem von einem Bediener zu betätigenden Bedienelement (10) und einem zu betätigenden Element (28) bei einem Fahrzeug, die beide nicht direkt miteinander mechanisch gekoppelt sind, mit

einem ersten elektrischen Aktuator (16), der mit dem Bedienelement (10) mechanisch gekoppelt ist,

einem zweiten elektrischen Aktuator (20), der mit dem zu betätigenden Element (28) mechanisch gekoppelt ist,

einem Detektor (22) zur Erfassung eines Gegenmomentes oder einer Gegenkraft am zu betätigenden Element (28),

einer Steuereinrichtung (18), die mit den beiden Aktuatoren (16, 20) verbunden ist und diese in Abhängigkeit von dem erfaßten Gegenmoment oder der erfaßten Gegenkraft ansteuert,

**dadurch gekennzeichnet**,

das die Steuereinheit (18) eine Größe für die nachzubildende mechanische Kopplung zwischen dem Bedienelement (10) und dem zu betätigenden Element (28) in Form einer Matrix ($Z_{LS}$, $Z_{LSS}$) enthält oder daß das Steuergerät (18) zur Aufnahme einer solchen Größe ausgebildet ist,

daß die Steuereinheit (18) derart ausgebildet ist, um auf der Basis der Größe für die nachzubildende mechanische Kopplung und unter Berücksichtigung der Kopplungen zwischen dem ersten Aktuator (16) und dem Bedienelement (10) sowie dem zweiten Aktuator (20) und dem zu betätigenden Element (28) zumindest eine Aktuator-Kopplungsgröße zu berechnen und

daß die Steuereinheit (18) derart ausgebildet ist, um wenigstens aus der zumindest einen Aktuator-Kopplungsgröße und dem erfaßten Gegenmoment oder der erfaßten Gegenkraft zumindest eine Steuerungsgröße für den ersten Aktuator (16) zu bestimmen.

9. Vorrichtung nach Anspruch 8,
**dadurch gekennzeichnet,**
**daß** die nachzubildende mechanische Kopplung in Form einer Matrix $Z_{LS}$ im Steuergerät (18) abgelegt oder diesem zuführbar ist und daß eine Berechnungseinheit des Steuergerätes zur Berechnung eines Zusammenhanges

$$\begin{bmatrix} \varphi_{AM} \\ \varphi_{AM} \end{bmatrix} = Z_{\mathrm{Reg}} \begin{bmatrix} \varphi_{BM} \\ \tau_{BM} \end{bmatrix},$$

wobei $\phi_{AM}$ ein Winkel oder eine Länge am ersten Aktuators, $\phi_{BM}$ ein Winkel oder eine Länge am zweiten Aktuator, $\tau_{AM}$ ein Moment oder eine Kraft am ersten Aktuator und $\tau_{BM}$ ein Moment oder eine Kraft am zweiten Aktuator darstellt, unter Berücksichtigung der Bedingung

$$Z_{AM} Z_{Reg} Z_{BM} = Z_{LS}$$

mit $Z_{AM}$ als Kopplungsmatrix zwischen dem Bedienelement und dem ersten Aktuator, $Z_{BM}$ als Kopplungsmatrix zwischen dem zu betätigenden Element und dem zweiten Aktuator,
ausgebildet ist.

10. Vorrichtung nach einem der Ansprüche 8 oder 9,
**dadurch gekennzeichnet,**
**daß** die Steuereinrichtung (18) eine Filtereinheit zur Störunterdrückung aufweist.

11. Vorrichtung nach einem der Ansprüche 8 bis 10,
**dadurch gekennzeichnet,**
**daß** das Steuergerät (18) derart ausgebildet ist, daß die darin abgelegte oder dieser zuzuführenden, der mechanischen Kopplung entsprechenden Größe in Abhängigkeit von Parametern, wie der Fahrzeuggeschwindigkeit, der Bediengeschwindigkeit des Bedienelements oder des Straßenzustandes veränderlich ist.

12. Vorrichtung nach einem der Ansprüche 8 bis 11,
**dadurch gekennzeichnet,**
**daß** auf Seiten des zu betätigenden Elements (28) ein lokaler Momenten- oder Kraftkreis zur Störunterdrückung vorgesehen ist.

**Claims**

1. A method for simulating a mechanical coupling between an operating element (10) to be actuated by an operator and an element (28) to be actuated in a vehicle, neither of which is directly coupled to one another mechanically, wherein the operating element (10) is acted upon by a first electrical actuator (16) in terms of torque or force and the element (28) to be actuated is acted upon in terms of torque or force by a second electrical actuator (20), comprising the steps:

   acting upon the element (28) to be actuated by the second electrical actuator (20) with an active torque or an active force,
   detecting the counter-torque ($\tau_{LG}$) acting on the element (28) to be actuated, or the counter-force acting thereon,
   calculating a feedback torque or a feedback force as a function of the counter-torque or the counter-force,
   acting upon the operating element (10) by the first electrical actuator (16) with the feedback torque or the feedback force,
   **characterised in that**, a variable is provided for the mechanical coupling to be simulated between the operating element (10) and the element (28) to be actuated in the form of a matrix ($Z_{LS}$, $Z_{LSS}$),
   **in that** at least one actuator coupling variable is determined from the variable for the mechanical coupling to be simulated and taking into account the couplings between the first actuator (16) and the operating element (10) as well as the second actuator (20) and the element (28) to be actuated and **in that** at least one control variable for the first actuator (16) is determined from the at least one actuator coupling variable and the counter-torque detected or the counter-force detected.

2. A method according to claim 1, **characterised in that** as the actuator coupling variable, a transmission matrix $Z_{Reg}$ is calculated, which defines the coupling between the two actuators (16, 20) according to

$$\begin{bmatrix} \varphi_{AM} \\ \tau_{AM} \end{bmatrix} = Z_{Reg} \begin{bmatrix} \varphi_{BM} \\ \tau_{BM} \end{bmatrix}$$

wherein $\varphi_{AM}$ represents an angle or a length at the first actuator, $\varphi_{BM}$ an angle or a length at the second actuator, $\tau_{AM}$ a torque or a force at the first actuator and $\tau_{BM}$ a torque or a force at the second actuator, taking into consideration the condition

$$Z_{AM} Z_{Reg} Z_{BM} = Z_{LS}$$

with $Z_{AM}$ as the coupling matrix between the operating element (10) and the first actuator (16), $Z_{BM}$ as the coupling matrix between the element (28) to be actuated and the second actuator (20) and $Z_{LS}$ as the matrix of a mechanical coupling to be simulated between the operating element (10) and the element (28) to be actuated.

3. A method according to any one of the preceding claims, **characterised in that** the actuator coupling is determined in such a way that an angle transmission ratio and/or a torque or force transmission ratio is present between the two actuators

4. A method according to claim 3, **characterised in that** the angle, torque and/or force transmission ratio is determined as a function of the vehicle operating parameters.

5. A method according to any one of the preceding claims, **characterised in that** in determining the at least one actuator coupling variable or the at least one control variable, further vehicle operating and/or environment parameters are taken into account.

6. A method according to claim 5, **characterised in that** an actuating variable of the operating element (10), a vehicle speed, the road state or a yaw angle signal is used as the vehicle operating or environment parameter.

7. A method according to any one of the preceding claims, **characterised in that** to suppress disturbance, a local torque or force circuit is used in a module of the element (28) to be actuated.

8. A device for simulating a mechanical coupling between an operating element (10) to be actuated by an operator and an element (28) to be actuated in a vehicle, neither of which is directly coupled to one another mechanically, comprising
a first electrical actuator (16), which is mechanically coupled to the operating element (10),
a second electrical actuator (20), which is mechanically coupled to the element (28) to be actuated,
a detector (22) for detecting a counter-torque or a counter-force at the element (28) to be actuated,
a control device (18), which is connected to the two actuators (16, 20) and activates them as a function of the counter-torque detected or the counter-force detected,
**characterised in that**, the control unit (18) contains a variable for the mechanical coupling to be simulated between the operating element (10) and the element (28) to be actuated in the form of a matrix ($Z_{LS}$, $Z_{LSS}$) or **in that** the control apparatus (18) is configured to receive a variable of this type, **in that** the control unit (18) is configured in such a way as to calculate at least one actuator coupling variable on the basis of the variable for the mechanical coupling to be simulated and taking in to account the couplings between the first actuator (16) and the operating element (10) and the second actuator (20) and the element (28) to be actuated and **in that** the control unit (18) is configured in such a way as to determine at least one control variable for the first actuator (16) at least from the at least one actuator coupling variable and the counter-torque detected or the counter-force detected.

9. A device according to claim 8, **characterised in that** the mechanical coupling to be simulated is stored in the form of a matrix $Z_{LS}$ in the control apparatus (18) or can be supplied thereto and **in that** a calculation unit of the control apparatus is configured to calculate an interrelationship

$$\begin{bmatrix} \varphi_{AM} \\ \tau_{AM} \end{bmatrix} = Z_{Reg} \begin{bmatrix} \varphi_{BM} \\ \tau_{BM} \end{bmatrix}$$

wherein $\varphi_{AM}$ represents an angle or a length at the first actuator, $\varphi_{BM}$ an angle or a length at the second actuator, $\tau_{AM}$ a torque or a force at the first actuator and $\tau_{BM}$ a torque or a force at the second actuator, taking in to account the condition

$$Z_{AM} Z_{Reg} Z_{BM} = Z_{LS}$$

with $Z_{AM}$ as the coupling matrix between the operating element and the first actuator, $Z_{BM}$ as the coupling matrix between the element to be actuated and the second actuator.

10. A device according to either of claims 8 or 9, **characterised in that** the control device (18) has a filter unit to suppress disturbance.

11. A device according to any one of claims 8 to 10, **characterised in that** the control apparatus (18) is configured in such a way that the variable stored therein or to be supplied thereto, corresponding to the mechanical coupling, is variable as a function of parameters, such as the vehicle speed, the operating speed of the operating element or the road state.

12. A device according to any one of claims 8 to 11, **characterised in that** a local torque or force circuit is provided to suppress disturbance on sides of the element (28) to be actuated.

**Revendications**

1. Procédé pour la reproduction d'un couplage mécanique entre un élément de manoeuvre (10) à actionner par un utilisateur et un élément à actionner (28) dans un véhicule, qui ne sont pas directement couplés mécaniquement entre eux, un premier actionneur électrique (16) appliquant un couple ou une force de rotation à l'élément de manoeuvre (10) et un deuxième actionneur électrique (20) appliquant un couple ou une force de rotation à l'élément à actionner (28), comprenant les étapes suivantes :

- application d'un couple de rotation actif ou d'une force active à l'élément à actionner (28) par le deuxième actionneur électrique (20),
- enregistrement du couple résistant ($\tau_{LG}$) ou de la force antagoniste agissant sur l'élément à actionner (28),
- calcul d'un couple de rotation de rétrocouplage ou d'une force de rétrocouplage en fonction du couple résistant ou de la force antagoniste,
- application du couple de rotation de rétrocouplage ou de la force de rétrocouplage à l'élément de manoeuvre (10) par le premier actionneur électrique (16),

**caractérisé en ce qu'**
on prédéfinit une grandeur sous la forme d'une matrice ($Z_{LS}$, $Z_{LSS}$) pour le couplage mécanique à reproduire entre l'élément de manoeuvre (10) et l'élément à actionner (28),
on détermine au moins une grandeur de couplage d'actionneurs à partir de la grandeur du couplage mécanique à reproduire et en tenant compte des couplages entre le premier actionneur (16) et l'élément de manoeuvre (10) ainsi qu'entre le deuxième actionneur (20) et l'élément à actionner (28), et
on détermine au moins une grandeur de commande pour le premier actionneur (16) au moins à partir de la ou des grandeurs de couplage d'actionneur et du couple résistant enregistré ou de la force antagoniste enregistrée.

2. Procédé selon la revendication 1,
**caractérisé en ce qu'**
on calcule comme grandeur de couplage d'actionneurs, une matrice de transmission $Z_{Reg}$ qui définit le couplage entre les deux actionneurs (16, 20) selon

$$\begin{bmatrix} \varphi_{AM} \\ \tau_{AM} \end{bmatrix} = Z_{Reg} \begin{bmatrix} \varphi_{BM} \\ \tau_{BM} \end{bmatrix}$$

OÙ $\varphi_{AM}$ définit un angle ou une longueur au niveau du premier actionneur, $\varphi_{BM}$ un angle ou une longueur au niveau du deuxième actionneur, $\tau_{AM}$ un couple ou une force au niveau du premier actionneur et $\tau_{BM}$ un couple ou une force au niveau du deuxième actionneur,
en tenant compte de la condition

$$Z_{AM} Z_{Reg} Z_{BM} = Z_{LS},$$

avec $Z_{AM}$ comme matrice de couplage entre l'élément de manoeuvre (10) et un premier actionneur (16), $Z_{BM}$ comme matrice de couplage entre l'élément à actionner (28) et le deuxième actionneur (20) et $Z_{LS}$ comme matrice d'un couplage mécanique à reproduire entre l'élément de manoeuvre (10) et l'élément à actionner (28),

3. Procédé selon l'une des revendications précédentes,
**caractérisé en ce qu'**
on détermine le couplage de telle sorte qu'il y a une transmission d'angle et/ou une transmission de couple ou de force entre les deux actionneurs.

4. Procédé selon la revendication 3,
**caractérisé en ce qu'**
on détermine la transmission d'angle, de couple ou de force en fonction de paramètres de fonctionnement du véhicule.

5. Procédé selon une des revendications précédentes,
**caractérisé en ce que**
la détermination de la ou des grandeurs de couplage d'actionneurs ou de la ou des grandeurs de commande tient compte de paramètres de fonctionnement du véhicule et/ ou de paramètres environnants.

**6.** Procédé selon la revendication 5,
**caractérisé en ce qu'**
comme paramètres de fonctionnement du véhicule ou de paramètre environnement, on utilise une grandeur d'actionnement de l'élément de manoeuvre (10), une vitesse du véhicule, l'état de la route ou un signal d'angle de lacet.

**7.** Procédé selon l'une des revendications précédentes,
**caractérisé en ce que**
pour éliminer les défaillances, on utilise un circuit de couple ou de force local dans un module de l'élément à actionner (28).

**8.** Dispositif pour la reproduction d'un couplage mécanique entre un élément de manoeuvre (10) à actionner par un utilisateur et un élément à actionner (28) dans un véhicule, qui ne sont pas directement couplés mécaniquement entre eux, avec
un premier actionneur électrique (16) couplé mécaniquement avec l'élément de manoeuvre (10),
un deuxième actionneur électrique (20) couplée mécaniquement avec l'élément à actionner (28),
un détecteur (22) pour enregistrer un couple résistant ou une force antagoniste sur l'élément à enregistrer (28), et
un dispositif de commande (18) relié aux deux actionneurs (16, 20) et qui commande ceux-ci en fonction du couple résistant enregistré ou de la force antagoniste enregistrée,
**caractérisé en ce que**
l'unité de commande (18) contient une grandeur pour le couplage mécanique à reproduire entre l'élément de manoeuvre (10) et l'élément à actionner (28) sous la forme d'une matrice ($Z_{LS}$, $Z_{LSS}$), ou le dispositif de commande (18) est conçu pour recevoir une telle grandeur,
l'unité de commande (18) est conçue pour calculer au moins une grandeur de couplage d'actionneurs sur la base de la grandeur du couplage mécanique à reproduire et en tenant compte des couplages entre le premier actionneur (16) et l'élément de manoeuvre (10) ainsi qu'entre le deuxième actionneur (20) et l'élément à actionner (28), et
l'unité de commande (18) est conçue pour déterminer au moins une grandeur de commande pour le premier actionneur (16) au moins à partir d'au moins une grandeur de couplage d'actionneurs et du couple résistant ou de la force antagoniste enregistrés.

**9.** Dispositif selon la revendication 8,
**caractérisé en ce que**
le couplage mécanique à reproduire sous la forme d'une matrice $Z_{LS}$ est enregistré dans le dispositif de commande (18) ou peut être transmis à celui-ci et une unité de calcul du dispositif de commande est conçue pour calculer une relation

$$\begin{bmatrix} \varphi_{AM} \\ \varphi_{AM} \end{bmatrix} = Z_{Reg} \begin{bmatrix} \varphi_{BM} \\ \tau_{BM} \end{bmatrix},$$

où $\varphi_{AM}$ représente un angle ou une longueur au niveau du premier actionneur, $\varphi_{BM}$ un angle ou une longueur au niveau du deuxième actionneur, $\tau_{AM}$ un couple ou une force au niveau du premier actionneur et $\tau_{BM}$ un couple ou une force au niveau du deuxième actionneur,
en tenant compte de la condition

$$Z_{AM} Z_{Reg} Z_{BM} = Z_{LS},$$

avec $Z_{AM}$ comme matrice de couplage entre l'élément de manoeuvre et le premier actionneur et $Z_{BM}$ comme matrice de couplage entre l'élément à actionner et le deuxième actionneur.

**10.** Dispositif selon l'une des revendications 8 ou 9,
**caractérisé en ce que**
le dispositif de commande (18) présente une unité de filtrage pour éliminer les défaillances.

**11.** Dispositif selon une des revendications 8 à 10,
**caractérisé en ce que**

l'appareil de commande (18) est conçu de sorte que la grandeur correspondant au couplage mécanique enregistrée dedans ou pouvant lui être transmise peut être modifiée en fonction de paramètres tels que la vitesse du véhicule, la vitesse de fonctionnement de l'élément de manoeuvre ou l'état de la route.

**12.** Dispositif selon l'une des revendications 8 à 11,
 **caractérisé en ce qu'**
 un circuit de couple ou de force local est prévu sur les côtés de l'élément à actionner (28) pour éliminer les défaillances.

Fig. 1

*Fig. 2*

*Fig. 3*

Fig. 4

Fig. 5